# EUROPÄISCHE PATENTSCHRIFT

(11) **EP 3 174 614 B1**
(45) Veröffentlichungstag und Bekanntmachung des Hinweises auf die Patenterteilung: **11.09.2019**
(21) Anmeldenummer: 15739540.1
(22) Anmeldetag: 10.07.2015
(51) Int. Cl.: B01D 45/08, F02M 35/022, F01M 13/04

(54) **KASKADENIMPAKTOR**
CASCADE IMPACTOR
IMPACTEUR EN CASCADE

(30) Priorität: 30.07.2014 DE 102014214973
(43) Veröffentlichungstag der Anmeldung: 07.06.2017
(73) Patentinhaber: POLYTEC PLASTICS Germany GmbH & Co. KG, 49393 Lohne (DE)
(72) Erfinder: JANSSEN, Hans, 49413 Dinklage (DE); MEYER, Christian, 49377 Vechta (DE); LESON, Christoph, 49413 Dinklage (DE)
(74) Vertreter: dompatent von Kreisler Selting Werner - Partnerschaft von Patent- und Rechtsanwälten mbB
(86) Internationale Anmeldenummer: PCT/EP2015/065844
(87) Internationale Veröffentlichungsnummer: WO 2016/015976

(56) Entgegenhaltungen:
- WO-A1-02/32546
- WO-A1-2013/017832
- DE-A1-102008 044 857
- DE-A1-102010 036 399

## Beschreibung

Gegenstand der Erfindung ist ein Kaskadenimpaktor mit mehreren Stufen.

Bei einem Kaskadenimpaktor handelt es sich um eine Reihenschaltung von Düsenplatten. Der sich von Stufe zu Stufe reduzierende Düsendurchmesser bewirkt üblicherweise eine Erhöhung der Gasgeschwindigkeit. Zwischen den einzelnen Düsenplatten sind Prallflächen angebracht, die mit Filterscheiben belegt sind. Ein mit Feststoffen (Partikeln) oder Flüssigkeiten beladener Gasstrom tritt auf das Filter und wird dort umgelenkt. Während feine Beladungen bei keinen Gasgeschwindigkeiten dem Strom folgen, werden größere Partikel oder Tröpfchen am Filter abgeschieden. Das Ansteigen der Gasgeschwindigkeit von Kaskade zu Kaskade trennt dadurch die einzelnen Korn- oder Flüssigkeitsfraktionen ab. Kaskadenimpaktoren können auch in heißen, chemisch aggressiven Gasen unmittelbar eingesetzt werden.

WO2013/017832 A1 offenbart einen Impaktor mit einer federgestützten Prallwand und einer zweiten seitlichen Prallwand.

EP 2 378 090 A1 betrifft einen Ölnebelabscheider (1) für eine Kurbelgehäuseentlüftungseinrichtung. Er umfasst eine erste Abscheidereinheit (2), die zumindest einen Filterkörper (10) aufweist, der in einem Blow-by-Gaspfad (11) so angeordnet ist, dass er vom Blow-by-Gas durchströmbar ist. Eine zweite parallel zur ersten Abscheidereinheit (2) geschaltete Abscheidereinheit (3) ist vorgesehen, die in einem die erste Abscheidereinheit (2) umgehenden Bypasspfad (18) angeordnet ist. Mit einem Bypassventil (4) kann der Bypasspfad (18) geöffnet werden, sobald ein Differenzdruck an der ersten Abscheidereinheit (2) einen vorbestimmten Wert übersteigt.

Das Gas durchläuft zwei oder mehr hintereinander angeordnete Impaktorstufen.

Der Impaktor als Abscheider und auch eine Impaktor Kaskade bestehend aus mehreren Stufen ist bekannt. Allerdings sind diese einzelnen Stufen nicht variabel. Das heißt, Bohrungsdurchmesser und Plattenabstand sind fix ausgelegt.

Die Aufgabe der vorliegenden Erfindung besteht in der Bereitstellung eines variablen Kaskadenimpaktors, bei dem die Abscheideleistung den geforderten Gegebenheiten angepasst werden kann.

Die vorgenannte Aufgabe wird gelöst durch einen Kaskadenimpaktor mit einer ersten Stufe umfassend eine Platte 2 mit fixen Bohrungen als Gaseintritt und wenigstens einer ersten Prallwand 4 mit variablem Abstand zur Platte 2 und wenigstens eine in Strömungsrichtung nach der ersten Prallwand 4 angeordneten zweiten Stufe umfassend eine fixierte zweite Prallwand 5, wobei das Gas senkrecht auf die zweite Prallwand (5) auftritt und das Gas an der zweiten Prallwand (5) in zwei entgegengesetze Richtungen abströmt.

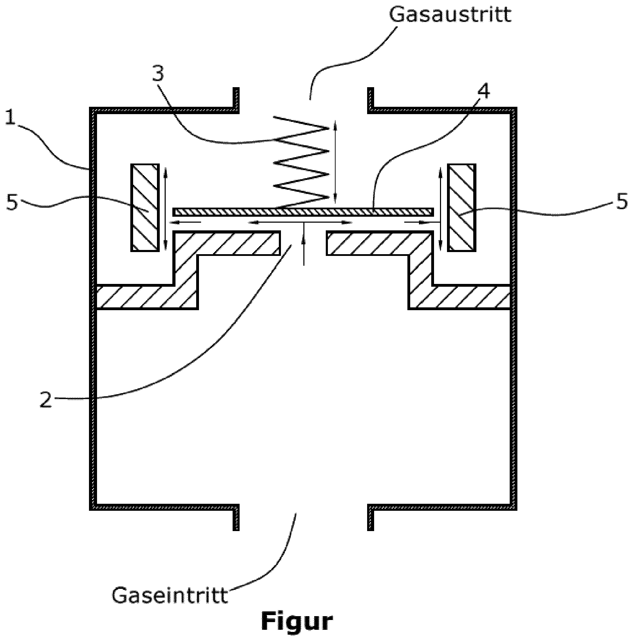

Gemäß Fig. 1 besteht die erste Stufe aus einer Platte mit kleinen fixen Bohrungen 2 und einer in Strömungsrichtung dahinter angeordneten Prallwand 4. Diese Prallwand 4 ist nicht notwendigerweise fix beabstandet sondern gegebenenfalls federbelastet 3 und hat dadurch bei kleinen Volumenströmen einen kleinen Abstand zu den Bohrungen 2. Nimmt der Volumenstrom zu, so kann sich der Abstand der Prallwand 4 zu den Bohrungen 2 erhöhen und eine größere Gasmenge kann ohne großen Druckanstieg passieren. Dies erlaubt einen hohen Abscheidegrad an der erste Impaktorstufe, weil der Abstand der Prallwand 4 zu den Bohrungen minimiert werden kann und dieser Abstand ein Parameter für die Abscheidungsleistung bei einem Impaktor ist. Gleichzeitig können große Volumenströme effektiv ohne großen Druckanstieg durch geleitet werden.

Das besondere an dem erfindungsgemäßen Kaskadenimpaktor ist, dass anschließend an die erste Stufe eine zweite Impaktorstufe folgt. Dazu wird die Gasgeschwindigkeit im variablen Spalt der ersten Stufe dazu genutzt, die im Gas befindlichen Tröpfchen- oder Feststoffpartikel mit hoher Geschwindigkeit auf eine zweite jetzt fest beabstandete Wand 5 zu schleudern. Durch die gegebenenfalls vorhandene Federvorspannung 3 wird eine hohe Gasgeschwindigkeit bei kleinen und großen Volumenströmen erreicht.

Das Gas kann an der zweiten fixen Prallwand 5 nach unten und oben entweichen, so dass der Strahl senkrecht auf die Wand 5 auftreffen kann. Diese Strahlaufteilung ist wichtig, weil das Gas dadurch in zwei entgegengesetzte Richtungen entweichen kann und es den Tröpfchen bzw. Feststoffpartikeln ermöglicht wird, die zweite Prallwand 5 zu erreichen. Bei Kontakt mit der Wand 5 sind die Tröpfchen bzw. Feststoffpartikel abgeschieden.

In einer bevorzugten Ausführungsform der vorliegenden Erfindung besteht der Kaskadenimpaktor aus lediglich einer ersten und einer zweiten Stufe. Grundsätzlich können zwar auch mehrere Impaktorstufen vorhanden sein, jedoch reichen in den allermeisten Fällen bedingt durch die vorliegende Erfindung die vorgenannten zwei Stufen aus, um Tröpfchen bzw. Feststoffpartikel in ausreichender Menge aus einem Gasstrom zu entfernen.

Der Winkel der Anordnung der Prallflächen zueinander kann beliebig variiert werden. Je näher der Winkel im Wert von 90° entspricht, desto größer ist jedoch seine Abscheidungsleistung. Dementsprechend ist es im Sinne der vorliegenden Erfindung besonders bevorzugt, die Prallflächen der ersten und zweiten Prallwand 4,5 in einem Winkel von 60 bis 120°, insbesondere von 85 bis 95° zueinander auszurichten. Ganz besonders bevorzugt im Sinne der vorliegenden Erfindung ist es, wenn die Prallflächen der ersten und zweiten Prallwand 4,5 in einem Winkel von 90° zueinander stehen. Gleiches gilt naturgemäß auch für weitere folgende Prallwände, sofern diese erforderlich sind.

Erfindungsgemäß kann die Prallwand 4 durch eine dem Gasstrom entgegentretende Krafteinwirkung mit einem variablen Abstand zur Platte 2 eingerichtet werden. Grundsätzlich ist dies unter Mithilfe einer mechanischen oder elektrischen Steuerung möglich. Im Sinne der vorliegenden Erfindung ist es jedoch besonders bevorzugt, wenn die Prallwand 4 durch eine Feder 3 gegen die Platte 2 gedrückt wird. Damit wird der Abstand durch den Druck des Gasstroms variiert. Mit steigendem Volumenstrom wird die Prallwand 4 gegen die Feder 3 gedrückt und somit der Abstand zur Platte 2 vergrößert und gibt einen entsprechenden Strömungsspalt frei.

Besonders bevorzugt wird durch diesen Strömungsspalt das Gas mit hoher Geschwindigkeit gegen die Prallwand 5 gelenkt.

Bedingt durch diesen Gasstrom kann das Gas an der Prallwand 5 in beide Richtungen abströmen.

In einer weiteren bevorzugten Ausführungsform der vorliegenden Erfindung können die Prallwand 4 und die Feder 3 einteilig als ein Federblech ausgeführt sein. Hierdurch ergeben sich weitere bautechnische Vereinfachungen des erfindungsgemäßen Kaskadenimpaktors.

Anstelle einer einzelnen Bohrung 2, wie in Fig. 1 dargestellt, kann auch eine große Anzahl von Bohrungen, beispielsweise 20 bis 100 angebracht sein. Besonders bevorzugt im Sinne der vorliegenden Erfindung werden diese durch ein einteiliges Federblech abgedeckt.

## Patentansprüche

1. Kaskadenimpaktor mit einer ersten Stufe umfassend eine Platte (2) mit fixen Bohrungen als Gaseintritt und wenigstens einer ersten Prallwand (4) mit variablem Abstand zur Platte (2) und wenigstens eine in Strömungsrichtung nach der ersten Prallwand (4) angeordneten zweiten Stufe umfassend eine fixierte zweite Prallwand (5), **dadurch gekennzeichnet, dass das Gas senkrecht auf die zweite Prallwand (5) auftrifft und** das Gas an der zweiten Prallwand (5) in zwei entgegengesetzte Richtungen **abströmt.**

2. Kaskadenimpaktor nach Anspruch 1 bestehend aus einer ersten und zweiten Stufe.

3. Kaskadenimpaktor nach Anspruch 1 oder 2, **dadurch gekennzeichnet**, die Prallflächen der ersten und zweiten Prallwand (4,5) in einem einen Winkel von 60 bis 120°, insbesondere von 85 bis 95° zueinander stehen.

4. Kaskadenimpaktor nach Anspruch 1 oder 2, **dadurch gekennzeichnet**, die Prallflächen der ersten und zweiten Prallwand (4,5) in einem Winkel von 90° zueinander stehen.

5. Kaskadenimpaktor nach einem der Ansprüche 1 bis 4, **dadurch gekennzeichnet dass** die Prallwand (4) durch eine Feder (3) gegen die Platte (2) gedrückt wird.

6. Kaskadenimpaktor nach einem der Ansprüche 1 bis 5, **dadurch gekennzeichnet dass** mit steigendem Volumenstrom die Prallwand (4) gegen die Feder (3) zur Platte (2) abhebt und einen Strömungspalt freigibt.

7. Kaskadenimpaktor nach Anspruch 6, **dadurch gekennzeichnet dass** durch diesen Strömungspalt das Gas mit hoher Geschwindigkeit gegen die Prallwand (5) gelenkt wird.

8. Kaskadenimpaktor nach einem der Ansprüche 1 bis 7, **dadurch gekennzeichnet, dass** die Prallwand (4) und die Feder (3) einteilig als Federblech ausgeführt sind.

9. Kaskadenimpaktor nach einem der Ansprüche 1 bis 8, **dadurch gekennzeichnet dass** die eine große Anzahl von Bohrungen, insbesondere 20 bis 100, durch ein einteiliges Federblech abgedeckt werden.

## Claims

1. A cascade impactor comprising a first stage including a plate (2) with fixed bores as a gas inlet and at least one first baffle (4) with a variable distance to the plate (2), and at least one second stage arranged downstream of the first baffle (4) and comprising a fixed second baffle (5), **characterized in that** the gas impinges vertically onto the second baffle (5) and the gas flows off the second baffle (5) in two opposite directions.

2. The cascade impactor according to claim 1, consisting of first and second stages.

3. The cascade impactor according to claim 1 or 2, **characterized in that** the baffle surfaces of the first and second baffles (4, 5) are at an angle of 60 to 120°, especially from 85 to 95°.

4. The cascade impactor according to claim 1 or 2, **characterized in that** the baffle surfaces of the first and second baffles (4, 5) are at a mutual angle of 90°.

5. The cascade impactor according to any of claims 1 to 4, **characterized in that** the baffle (4) is pressed against plate (2) by a spring (3).

6. The cascade impactor according to any of claims 1 to 5, **characterized in that**, as the volume flow increases, the baffle (4) is pressed against the spring (3) and thus is removed from plate (2), opening a flow gap.

7. The cascade impactor according to claim 6, **characterized in that** the gas is directed against the baffle (5) at a high velocity through said flow gap.

8. The cascade impactor according to any of claims 1 to 7, **characterized in that** said baffle (4) and said spring (3) are designed integrally as a spring plate.

9. The cascade impactor according to any of claims 1 to 8, **characterized in that** a large number of bores, especially from 20 to 100, are covered by an integral spring plate.

## Revendications

1. Impacteur à cascades comprenant un premier étage incluant une plaque (2) avec des alésages fixes sous forme d'entrée de gaz et au moins un premier paroi d'impact (4) avec une distance variable de la plaque (2), et au moins un deuxième étage arrangé en aval du premier paroi d'impact (4) et incluant un deuxième paroi d'impact (5) fixé, **caractérisé en ce que** le gaz frappe le deuxième paroi d'impact (5) perpendiculairement et que le gaz s'écoule en deux directions opposées au deuxième paroi d'impact (5).

2. Impacteur à cascades selon la revendication 1, consistant en un premier et un deuxième étages.

3. Impacteur à cascades selon la revendication 1 ou 2, **caractérisé en ce que** les surfaces d'impact du premier et du deuxième parois d'impact (4, 5) sont mutuellement à un angle de 60 à 120°, notamment de 85 à 95°.

4. Impacteur à cascades selon la revendication 1 ou 2, **caractérisé en ce que** les surfaces d'impact du premier et du deuxième parois d'impact (4, 5) sont mutuellement à un angle de 90°.

5. Impacteur à cascades selon l'une quelconque des revendications 1 à 4, **caractérisé en ce que** ledit paroi d'impact (4) est pressé contre la plaque (2) au moyen d'un ressort (3).

6. Impacteur à cascades selon l'une quelconque des revendications 1 à 5, **caractérisé en ce que**, lorsque le débit volumique est augmenté, le paroi d'impact (4) s'enlève de la plaque (2) contre le ressort (3) et libère un interstice d'écoulement.

7. Impacteur à cascades selon la revendication 6, **caractérisé en ce que** ledit interstice d'écoulement dirige le gaz à haute vitesse contre le paroi d'impact (5).

8. Impacteur à cascades selon l'une quelconque des revendications 1 à 7, **caractérisé en ce que** ledit paroi d'impact (4) et ledit ressort (3) sont formés en une pièce sous forme de tôle à ressorts.

9. Impacteur à cascades selon l'une quelconque des revendications 1 à 8, **caractérisé en ce qu'**un grand nombre d'alésages, notamment 20 à 100, sont couverts par un tôle à ressorts formé en une pièce.
